# DEMANDE DE BREVET EUROPEEN

(11) **EP 1 125 539 A1**
(43) Date de publication de la demande: **22.08.2001**
(21) Numéro de dépôt: 01420039.8
(22) Date de dépôt: 15.02.2001
(51) Int. Cl.: A47J 37/08

(54) **Grille-pain à parois chauffantes transparentes**

(30) Priorité: 18.02.2000 FR 0002058
(71) Demandeur: SEB S.A., 69130 Ecully (FR)
(72) Inventeur: Thiriat, Sylvain, 88120 Cleurie (FR)

(57) **Abrégé**

- L'invention concerne un grille-pain comportant une base, au moins deux éléments chauffants sensiblement verticaux, définissant un espace de cuisson au moins ouvert dans la partie supérieure du grille-pain, lesdits éléments chauffants se présentant sous la forme de parois vitrées transparentes, composées d'un substrat (3) de type verre recouvert, sur l'une de ses faces, d'une couche d'oxyde métallique, lesdites couches étant reliées à un circuit d'alimentation électrique apte à provoquer leur échauffement, caractérisé en ce qu'au moins deux parois vitrées possèdent un rebord supérieur (6), ledit rebord étant réalisé en un matériau transparent. Selon l'invention, les rebords (6) sont orientés vers l'extérieur de l'espace de cuisson et peuvent présenter, dans une variante de réalisation des bossages, de telle sorte à présenter des points d'appui à différentes hauteurs. Avantageusement, le substrat (3) des parois vitrées et son rebord (6) sont réalisés en verre pressé, lors d'une opération de moulage. Application au réchauffage des petits pains et viennoiseries.

## Description

La présente invention se rapporte au domaine technique des appareils électroménagers de cuisson du type grille-pain et concerne plus particulièrement un appareil dont les éléments chauffants sont constitués de parois transparentes.

Dans ce domaine, il est connu, par le document US 2,564,677, un grille-pain dont les éléments chauffants sont des parois transparentes, telles des plaques de verre, recouvertes d'une couche d'oxyde métallique à base d'oxyde d'étain et d'indium, par la suite appelée communément ITO (pour "Indium Tin Oxide"). Cette couche, dont l'épaisseur est comprise entre 0,3 µm et 0,7 µm, est transparente et résistive, de sorte que, reliée à une alimentation électrique, elle s'échauffe et permet à la plaque de verre de griller le pain. De tels éléments peuvent donc être utilisés afin de contrôler la cuisson des aliments en visualisant directement le degré de brunissage du pain.

On connaît par ailleurs, des dispositifs permettant de réchauffer des petits pains, cette fonction de réchauffage étant réalisée soit à l'aide d'un accessoire additionnel amovible, venant se positionner au dessus de l'ouverture de la chambre de grillage, tel que celui décrit dans le document DE G 9115161.9, soit à l'aide d'un accessoire intégré au grille-pain, escamotable lorsqu'il n'est pas utilisé.

Ainsi, il est connu, notamment par le document DE G 93 16 913.2, un grille-pain comprenant un moyen de réchauffage composé de deux fils métalliques rigides dépliables en rotation autour d'un axe de telle sorte à former un support situé à distance au-dessus du grille-pain.

Si un tel système offre des résultats acceptables, il n'en demeure pas moins que le mécanisme de rotation des fils peut se détériorer ou s'affaisser sous le poids de l'aliment à réchauffer. De plus, un tel dispositif nécessite des pièces additionnelles, notamment pour la rotation des fils, ce qui augmente le prix de revient dudit grille-pain.

Par ailleurs, ce dispositif est difficilement compatible et adaptable à un concept de vision du pain soumis à l'énergie des éléments chauffants.

Le but de la présente invention est de remédier aux problèmes présentés par l'art antérieur, en évitant de proposer un accessoire amovible pour le réchauffage des petits pains, qu'il est souvent difficile de ranger et qui peut être perdu, tout en assurant une vision la plus complète possible du pain mis à griller ou à réchauffer.

La présente invention est atteinte à l'aide d'un grille-pain comportant une base, au moins deux éléments chauffants sensiblement verticaux, définissant un espace de cuisson au moins ouvert dans la partie supérieure du grille-pain, lesdits éléments chauffants se présentant sous la forme de parois vitrées transparentes, composées d'un substrat de type verre recouvert, sur l'une de ses faces, d'une couche d'oxyde(s) métallique(s), lesdites couches étant reliées à un circuit d'alimentation électrique apte à provoquer leur échauffement, caractérisé en ce qu'au moins deux parois vitrées possèdent un rebord supérieur, ledit rebord étant réalisé en un matériau transparent.

Par rebord, on entend une partie du bord supérieur de paroi et/ou une pièce rapportée à ce niveau qui fait saillie latérale pour former une portion de bordure.

Par cette configuration, le réchauffage des petits pains et viennoiseries est correctement assuré, tout en permettant un contrôle visuel du pain, afin d'éviter notamment un brunissement trop prononcé, tout en restant en harmonie esthétique avec les parois vitrées transparentes. Par ailleurs, ce principe évite un dispositif amovible difficile à ranger et susceptible d'être perdu. De plus, l'aspect transparent du rebord évite l'impression d'encombrement générée par une telle fonction lorsque le dispositif est partiellement métallique et monté à demeure sur le grille-pain.

Selon une variante de réalisation de l'invention, les rebords sont orientés vers l'extérieur de l'espace de cuisson, permettant ainsi d'offrir une assiette de réception du pain suffisament large, assurant la stabilité du pain reposant sur lesdits rebords.

Avantageusement, les rebords des parois vitrées possèdent des bossages, de telle sorte à présenter des points d'appui à différentes hauteurs, et assurant un passage de l'air chaud entre le rebord et le pain posé sur ce dernier. Le pain est ainsi réchauffé de manière plus homogène.

Selon une variante de réalisation de l'invention, les rebords des parois vitrées présentent une déclivité vers l'ouverture de l'espace de cuisson. Cette déclivité assure un centrage automatique et une meilleure stabilité des petits pains posés sur les rebords.

Selon une autre variante de réalisation de l'invention, le rebord de chaque vitre comporte, sur la face opposée à celle recevant le pain, un élément éléctriquement résistif apte à s'échauffer lorsqu'il est relié à une source de courant.

Ce principe permet ponctuellement de réchauffer les faces latérales des petits pains, amenant un chauffage complémentaire à celui généré dans l'espace de cuisson par les vitres chauffantes. Cette complémentarité accélère le réchauffage des petits pains.

Avantageusement, l'élément résistif est une couche d'oxyde(s) métallique(s), assurant la transparence de la fonction, en harmonie avec les éléments chauffants principaux.

Selon l'invention, des capots transparents sont disposés à proximité des faces des parois vitrées recouvertes de la couche d'oxyde(s) métallique(s). Ces capots transparents protègent les surfaces électriquement actives en interdisant leur accès à l'utilisateur. Leur transparence assure la vision du pain mis à griller ou à réchauffer.

Avantageusement, le substrat des parois vitrées et son rebord sont réalisés en verre pressé, lors d'une opération de moulage.

Ce procédé de réalisation permet, lors d'une seule opération de moulage, l'élaboration du substrat plan et du rebord, sans induire des coûts supplémentaires rédhibitoires pour constituer la fonction de réchauffage, tout en procurant une continuité de la paroi, sans effet de soudure ou d'éléments de liaison entre le substrat plan et le rebord.

La présente invention sera mieux comprise à l'aide de la description qui va suivre, en référence aux figures annexées, données à titre d'exemple non limitatif, parmi lesquelles :
- la figure 1 est un schéma en coupe représentant le principe de l'invention, dans une utilisation du grille-pain en mode réchauffage,
- la figure 2 est un schéma en coupe représentant le principe de l'invention, dans une utilisation du grille-pain en mode grillage,
- la figure 3 est une vue en perspective d'un substrat en verre comportant un rebord conforme à la présente invention,
- la figure 4 est une variante de réalisation du rebord d'un élément chauffant selon l'invention.

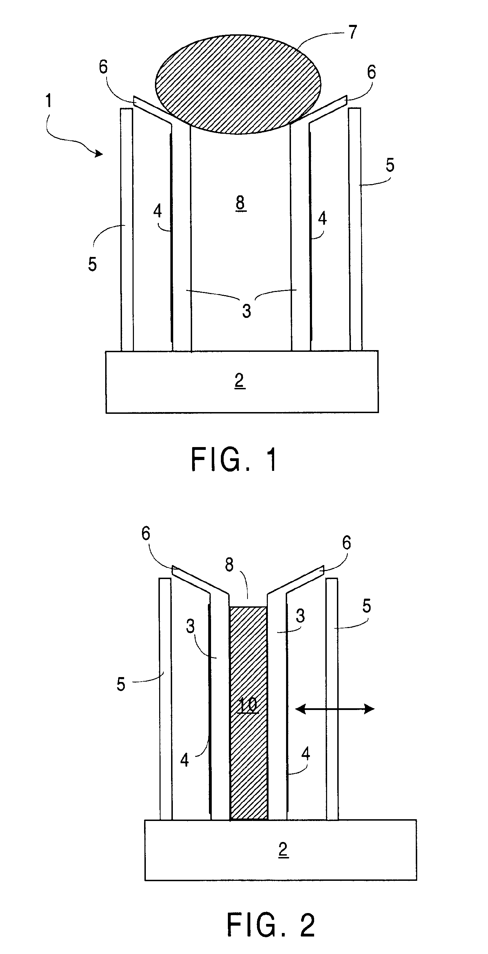

Comme illustré figure 1, le grille-pain 1 selon l'invention comporte deux éléments chauffants placés verticalement, délimitant entre eux un espace de cuisson 8. Ces éléments chauffants sont composés de substrats 3 réalisés en verre et recouverts, sur l'une de leur face, d'une couche d'oxyde(s) métallique(s) 4.

Selon la présente invention, ces substrats sont prolongés, dans leur partie supérieure, d'un rebord 6 transparent incliné ou horizontal. Ce rebord peut être une pièce ajoutée après la réalisation des substrats, telle une pièce plastique soudée, ou bien une déformation locale du substrat pour établir un coude permettant la réalisation du rebord.

Avantageusement, la mise en forme des substrats 3 est effectuée par moulage, par la technique du verre pressé. Cette technique permet des formes complexes que la technique d'élaboration classique planaire ne permet pas.

En effet, le procédé d'élaboration par moulage correspond à un pressage de verre fluide, dont la température est d'environ 1200°C, tombant dans une matrice, un poinçon pressant le verre afin de lui faire épouser la forme de la matrice et du poinçon. La pièce en verre est ensuite démoulée puis rebrûlée afin de supprimer les bavures. Un traitement thermique termine le cycle, afin de supprimer les contraintes et de renforcer les caractéristiques mécaniques de la pièce.

Les parois chauffantes ainsi obtenues ont une épaisseur comprise entre 3 et 6 mm.

Il est notamment possible, par cette technologie, de prolonger la partie plane du substrat 3 par un pan incliné 6 faisant office de rebord, lors d'une seule opération de moulage, afin de constituer, par la disposition de deux tels substrats en vis-à-vis, la fonction de réchauffage en présentant une assiette de support aux aliments à réchauffer.

Typiquement un tel rebord a une largeur comprise entre 10 et 40 mm et une épaisseur entre 3 et 10 mm.

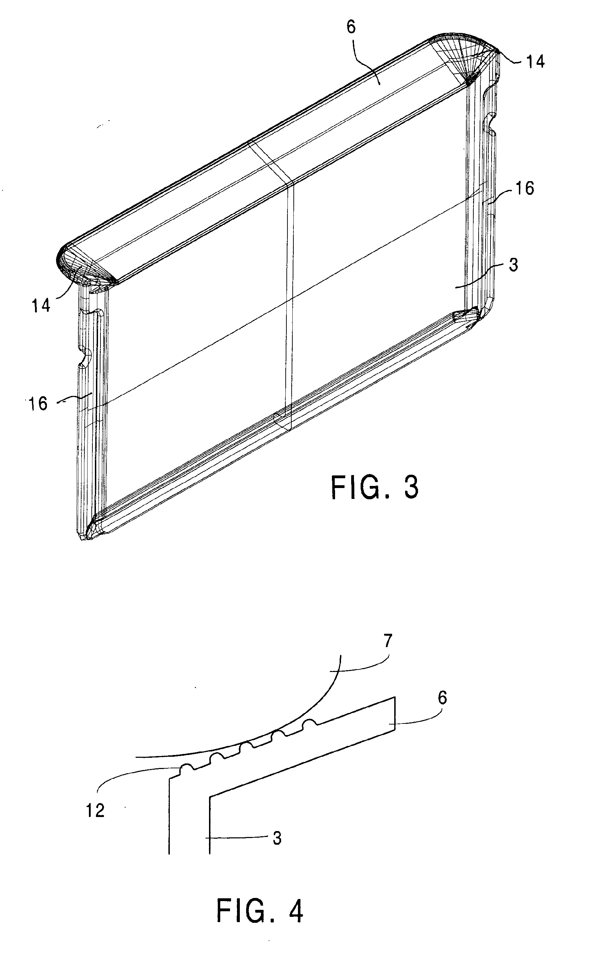

Comme illustré figure 3, le rebord 6 du substrat 3 présente un galbe 14 au niveau des bordures 16 des substrats, constituants ainsi une demi-pseudo-couronne qui limite les angles vifs tout en assurant un meilleur maintien des aliments.

Les couches d'oxyde(s) métallique(s) sont du type ITO ("Indium Tin Oxide"), FTO ("Fluor Tin Oxide"), TiO₂, tel qu'il est bien connu dans le domaine des semiconducteurs. De telles couches ont l'avantage de rester transparentes pour de faibles épaisseurs, tout en présentant des caractéristiques de résistance électrique. Elles sont donc notamment utilisées en tant qu'élément chauffant. Typiquement, les couches utilisées présentent une résistivité de 10 à 100 Ω/ □ et une épaisseur de l'ordre de 0,5 µm, ces deux paramètres pouvant être facilement modifiés et ajustés en fonction notamment de la puissance désirée.

Les contacts d'alimentation électrique de ces couches résistives 4 peuvent être réalisés à l'aide de bandes conductrices (non représentées) disposées le long des bordures 16 opposées de chaque substrat. Le passage du courant provoque un échauffement, par effet Joule, de ces couches qui échauffent, à leur tour, par conduction, les substrats de verre.

Les couches sont préférentiellement disposées sur la face des substrats opposée à celle définissant l'espace de cuisson 8, en raison de leur nocivité vis-à-vis des aliments à griller, mais également par le fait que de tels substrats présentent une émissivité environ 6 fois plus faible du côté de la couche d'oxyde(s) métallique(s) que du côté opposé, comme il est notamment rappelé dans la demande FR 2 731 311.

Afin de protéger l'utilisateur des risques électriques que représentent les couches actives 4, des capots 5 transparents sont disposés à proximité immédiate desdites couches, afin de respecter les normes relatives aux éléments sous tension, tout en gardant l'effet de transparence du grille-pain.

Pour la fonction "grillage", divers modes de réalisation peuvent être envisagés, soit un mode purement par rayonnement, soit un mode purement par conduction, soit un mode dit "quasi-conductif", où l'aliment 10 à griller est très proche des éléments chauffants mais écarté de ces derniers d'une faible distance. Ce dernier mode est développé dans le document FR 2 759 842.

Dans la variante où le pain 10 est grillé uniquement par rayonnement des éléments chauffants, d'une manière classique, il est prévu un chariot porte pain coulissant permettant d'amener le pain à proximité des éléments chauffants ainsi que de le décharger sans risque de brûlure. Ce mode de réalisation nécessite une température importante des éléments chauffants (environ 400°C) puisque le pain est éloigné de ces derniers.

Dans la variante où le pain 10 est grillé par conduction ou dans le mode dit "quasi-conductif", comme illustré sur les figures 1 et 2 présentées, l'espace de cuisson 8 peut être équipé ou non d'un chariot porte pain. En effet, dans ces deux modes, il est nécessaire de disposer précisément les éléments chauffants des faces du pain 10. Ceci nécessite donc un déplacement d'au moins l'un des deux éléments chauffants. Il peut donc être prévu que le débattement de cet élément chauffant soit suffisant pour que l'utilisateur puisse récupérer sa tranche de pain 10 grillée sans risque de brûlure. Un simple support de pain, sans coulissement vertical, peut donc constituer une solution économique.

Le grille-pain est donc équipé d'une base 2 servant de support à la mécanique de serrage du pain. Cette base 2 comporte un logement pour l'électronique de régulation de la température des vitres chauffantes ainsi que pour le contrôle du temps de grillage, et de diverses commandes notamment la sélection du degré de brunissage et le choix du mode de cuisson souhaité ("grillage" ou "réchauffage").

En fonction "grillage", le cycle commence par un serrage des plaques de verre sur le pain, précédé ou non par une descente du chariot porte pain si le grille-pain en est pourvu. Ces deux actions peuvent être manuelles, effectuées par l'utilisateur, ou automatiques, par une ou deux motorisation(s) adéquate(s). A titre d'exemple, il peut être prévu que le serrage puisse s'effectuer sur une course de 50 mm, conduisant, par exemple à un écartement entre les éléments chauffants variable entre 5 et 55 mm. D'autres valeurs peuvent être choisies, notamment en fonction des pays de commercialisation dudit grille-pain et des différents types de pain rencontrés, mais également en fonction de la présence ou non d'un chariot porte pain coulissant,...

En fin de cycle de grillage, l'alimentation des éléments chauffants est interrompue et au moins une des deux plaques s'écarte, permettant à l'utilisateur de récupérer sa tranche de pain grillée, éventuellement remontée par le chariot porte pain coulissant lorsqu'il est présent.

En fonction "réchauffage", les aliments 7 sont disposés sur les rebords 6, en présentant une face inférieure au dessus de l'espace de cuisson 8. Selon le débattement des plaques choisi, ces dernières sont peu serrées, ou ne sont pas pas serrées, afin de laisser l'air circuler librement et pour mieux répartir l'air réchauffé sur la surface inférieure du pain. En effet, les calories nécessaires au réchauffage sont transférées par convection et l'air, s'échauffant au contact des plaques de verre 3, dont la température est régulée autour de 230°C, monte ensuite par convection naturelle pour chauffer la face inférieure de l'aliment 7.

Le compromis sur le serrage des plaques résulte d'un écartement suffisant pour répartir au mieux les calories, sans réduire trop la densité énergétique apportée, tout en présentant le rebord 6 de chaque plaque suffisamment proche l'un de l'autre pour accueillir une grande variété de produits.

Un bouton de commande sur la base 2 du grille-pain, permet à l'utilisateur de sélectionner le mode "réchauffage", qui induit le règlage de l'écartement des éléments chauffants s'il y a lieu. Selon un mode préféré de réalisation de l'invention, les éléments chauffants ne sont pas déplacés en mode "réchauffage".

Cette commande permet également d'enclencher un cycle de chauffe, qui peut être réalisé par la descente du chariot porte pain lorsqu'il est présent, comme il est réalisé classiquement. Elle peut être réalisée avantageusement à l'aide du bouton de réglage de la temporisation, diminuant ainsi les interfaces avec l'utilisateur.

Selon une variante de réalisation de l'invention, le temps de cycle est fixe, indépendamment de la position du bouton de réglage du degré de brunissement du pain.

Selon une autre variante de réalisation de l'invention, il peut être prévu de diminuer la puissance, lorsque l'utilisateur désire réchauffer des petits pains. A cet effet, plusieurs solutions techniques sont possibles, par exemple un pont diviseur de tension permettant d'abaisser la tension d'alimentation des éléments chauffants, ou un cyclage alternant des périodes d'alimentation et d'arrêt des éléments chauffants.

Selon ces deux variantes, en fin de cycle, l'alimentation des éléments chauffants est arrêtée. Si les deux plaques ont été rapprochées pour cette opération, elles s'écartent alors.

Avantageusement, le rebord n'est pas plan et peut présenter des bossages 12 sur sa largeur, tel que présenté figure 4. D'autres configurations peuvent être envisagées sans sortir du cadre de la présente invention, le principe étant de présenter des zones d'appui du pain permettant un passage de l'air chaud entre la face inférieure de l'aliment et la face supérieure du pan incliné du rebord.

Selon une autre variante de réalisation de l'invention, les rebords possèdent un moyen de chauffage qui peut leur être propre ou en association avec le chauffage principal. Ce moyen de chauffage, situé sur le côté opposé à celui destiné à la réception du pain, pourra prendre la forme d'un serpentin résisitf. Avantageusement, il est constitué d'une couche d'oxyde(s) métallique(s) aux caractéristiques adaptées à la puissance recherchée, comme précédemment expliqué.

Dans les deux cas, ce moyen de chauffage permettra la surveillance visuelle du pain.

Ce moyen de chauffage sera déclenché lorsque la fonction "réchauffage" sera sélectionnée, afin de venir en complément du réchauffage principal généré par les éléments chauffants principaux. Il va de soi que la puissance de ce moyen de chauffage sera plus faible que celle des éléments chauffants principaux.

Par cette variante, on diminue considérablement le temps nécessaire au réchauffage des aliments.

## Revendications

1. Grille-pain (1) comportant une base (2), au moins deux éléments chauffants sensiblement verticaux, définissant un espace de cuisson (8) au moins ouvert dans la partie supérieure du grille-pain (1), lesdits éléments chauffants se présentant sous la forme de parois vitrées transparentes, composées d'un substrat (3) de type verre recouvert, sur l'une de ses faces, d'une couche d'oxyde(s) métallique(s) (4), lesdites couches étant reliées à un circuit d'alimentation électrique apte à provoquer leur échauffement, caractérisé en ce qu'au moins deux parois vitrées possèdent un rebord supérieur (6), ledit rebord (6) étant réalisé en un matériau transparent.

2. Grille-pain (1) selon la revendication précédente, caractérisé en ce que les rebords (6) sont orientés vers l'extérieur de l'espace de cuisson (8).

3. Grille-pain (1) selon l'une des revendications précédentes, caractérisé en ce que les rebords (6) des parois vitrées possèdent des bossages (12), de telle sorte à présenter des points d'appui à différentes hauteurs.

4. Grille-pain (1) selon l'une des revendications précédentes, caractérisé en ce que les rebords (6) des parois vitrées présentent une déclivité vers l'ouverture de l'espace de cuisson (8).

5. Grille-pain (1) selon l'une des revendications précédentes, caractérisé en ce que le rebord (6) de chaque vitre comporte, sur la face opposée à celle recevant le pain (7), un élément éléctriquement résistif apte à s'échauffer lorsqu'il est relié à une source de courant.

6. Grille-pain (1) selon la revendication précédente, caractérisé en ce que l'élément résistif est une couche d'oxyde(s) métallique(s) (4).

7. Grille-pain (1) selon l'une des revendications précédentes, caractérisé en ce que des capots (5) transparents sont disposés à proximité des faces des parois vitrées recouvertes de la couche d'oxyde(s) métallique(s) (4).

8. Grille-pain (1) selon l'une des revendications précédentes, caractérisé en ce que le substrat (3) des parois vitrées et son rebord (6) sont réalisés en verre pressé, lors d'une opération de moulage.
